# EUROPEAN PATENT APPLICATION

(11) **EP 2 930 922 A1**
(43) Date of publication of application: **14.10.2015**
(21) Application number: 13860299.0
(22) Date of filing: 15.08.2013
(51) Int. Cl.: H04N 5/445, H04L 29/06

(54) **SET TOP BOX CONTROL METHOD AND APPARATUS**

(30) Priority: 06.12.2012 CN 201210519839
(71) Applicant: ZTE Corporation, Shenzhen, Guangdong 518057 (CN)
(72) Inventor: LIANG, Bin, Shenzhen Guangdong 518057 (CN); LU, Jianfeng, Shenzhen Guangdong 518057 (CN); QIN, Yantao, Shenzhen Guangdong 518057 (CN); HUANG, He, Shenzhen Guangdong 518057 (CN); GAO, Li, Shenzhen Guangdong 518057 (CN)
(74) Representative: Brunazzi, Stefano
(86) International application number: PCT/CN2013/081546
(87) International publication number: WO 2014/086171

(57) **Abstract**

Provided are set top box control methods and apparatuses. A set top box method includes: a first set top box obtaining an operation currently performed by the first set top box; and the first set top box sending, to one or more set top boxes, indication information that carries operation information of the operation, wherein the indication information is used for instructing the one or more second set top boxes to determine whether to also perform the operation. The technical solution solves the technical problem that the application flexibility of set top boxes is low because set top boxes lack interaction with each other in the related art, thereby achieving the technical effects of improving the usage flexibility of set top boxes and improving the resource utilization ratio.

## Description

### Technical Field

The present invention relates to the field of communication, in particular to set top box control methods and apparatuses.

### Background

As the use of Internet Protocol Television (IPTV) becomes more and more common, people's requirements on IPTV service become increasingly higher. IPTV users increasingly hope that IPTV, like instant messaging services that are popular on the Internet nowadays, can also implement interaction between set top boxes when using set top boxes to watch programs or using application software provided by set top boxes.

However, the related art does not yet implement a method for interaction between set top boxes, thereby substantially reducing the flexibility of set top boxes and causing, to a certain extent, the waste of current set top box resources.

Aiming at the above-mentioned problem, no effective solution has been presented yet.

### Summary

The embodiments of the present invention provide set top box control methods and apparatuses to at least solve the technical problem that the application of set top boxes is not flexible because set top boxes lack interaction with each other in the related art.

According to an aspect of the embodiments of the present invention, a set top box control method is provided, including: a first set top box obtaining an operation currently performed by the first set top box; and the first set top box sending, to one or more second set top boxes, indication information that carries operation information of the operation, wherein the indication information is used for instructing the one or more second set top boxes to determine whether to also perform the operation.

In an example embodiment, the first set top box sending the indication information to the one or more second set top boxes includes: the first set top box sending the indication information to a network server; and the network server sending the indication information to the one or more second set top boxes, wherein the one or more set top boxes that are stored and have an association relationship with the first set top box are taken as the one or more second set top boxes by the network server,.

In an example embodiment, the first set top box sending the indication information to an IPTV server on which the first set top box registers includes: the first set top box sending the indication information to a network server by means of an address of the network server, wherein the address of the network server is sent by the IPTV server to the first set top box after the first set top box completes registration.

In an example embodiment, the operation includes at least one of: switching a current TV channel to a first TV channel; switching a current on-demand program to a first on-demand program; switching a currently listened music radio to a first music radio; switching currently enabled application software to first application software; switching from watching a TV channel to watching an on-demand program; and switching from watching an on-demand program to watching a TV channel.

According to another aspect of the embodiments of the present invention, a set top box control method is provided, including: a first set top box receiving indication information that carries operation information of an operation currently performed by a second set top box; the first set top box determining whether to also perform the operation; and when the first set top box determines that the first set top box is also to perform the operation, the first set top box performing the operation.

In an example embodiment, after the first set top box receiving the indication information, the method further includes: the first set top box displaying brief introduction information of the operation information on a terminal corresponding to the first set top box.

In an example embodiment, the first set top box performing the operation includes: receiving a control instruction sent by a user for triggering the first set top box to perform the operation; and the first set top box switching, in response to the control instruction, a current status of the first set top box to a status corresponding to an operation result indicated by the operation information.

In an example embodiment, the first set top box is a set top box having an association relationship with the second set top box in a network server.

In an example embodiment, the operation includes at least one of: switching a current TV channel to a first TV channel; switching a current on-demand program to a first on-demand program; switching a currently listened music radio to a first music radio; switching currently enabled application software to first application software; switching from watching a TV channel to watching an on-demand program; and switching from watching an on-demand program to watching a TV channel.

According to yet another aspect of the embodiments of the present invention, a set top box control apparatus is located inside a set top box and includes: an acquisition element configured to acquire an operation currently performed by the set top box; and a sending element configured to send, to another set top box, indication information that carries operation information of the operation, wherein the indication information is used for instructing the another set top box to determine whether to also perform the operation.

According to yet another aspect of the embodiments of the present invention, a set top box control apparatus is located inside a set top box and includes: a receiving element configured to receive indication information that carries operation information of an operation currently performed by another set top box; a determination element configured to determine whether the set top box is also to perform the operation; and an execution element configured to perform the operation when the determination element determines that the set top box is also to perform the operation.

In the embodiments of the present invention, when performing a switching operation, a set top box sends switching information thereof to one or more set top boxes having an association relationship therewith, so that the one or more set top boxes having an association relationship therewith may learn about an operation currently performed on the set top box and thus determine whether to also perform the operation according to the operation of the set top box. By means of the method above, the technical problem that the application flexibility of set top boxes is low because set top boxes lack interaction with each other in the related art is effectively solved, thereby achieving the technical effects of improving the usage flexibility of set top boxes and improving the resource utilization ratio.

### Brief Description of the Drawings

Drawings, provided for further understanding of the present invention and forming a part of the specification, are used to explain the present invention together with embodiments of the present invention rather than to limit the present invention. In the drawings:
Fig. 1 is an example flowchart showing a set top box control method according to an embodiment of the present invention;
Fig. 2 is another example flowchart showing a set top box control method according to an embodiment of the present invention;
Fig. 3 is an example block diagram showing the structure of a set top box control apparatus according to an embodiment of the present invention;
Fig. 4 is another example block diagram showing the structure of a set top box control apparatus according to an embodiment of the present invention;
Fig. 5 is a schematic diagram showing a system networking for implementing channel selection on a set top box according to an embodiment of the present invention; and
Fig. 6 is an example flowchart showing a method for implementing channel selection on a set top box according to an embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

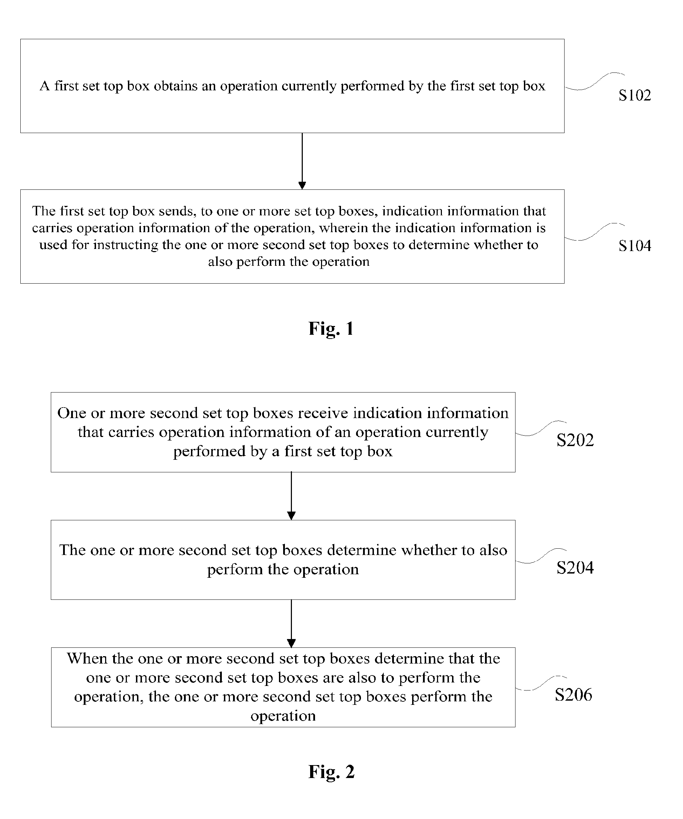

The embodiments of the present invention provide an example set top box control method, as shown in Fig. 1, and the method includes the following steps:
step S102: a first set top box obtains an operation currently performed by the first set top box; and
step S104: the first set top box sends, to one or more set top boxes, indication information that carries operation information of the operation, wherein the indication information is used for instructing the one or more second set top boxes to determine whether to also perform the operation.

For example, when watching a first channel, the first set top box switches the first channel to a second channel; at this time, the first set top box may send identification information of the second channel to the second set top box, and accordingly the second set top box may display brief introduction information of the second channel on a terminal corresponding to the second set top box, and then determine whether to "follow" or not, i.e., whether to also switch to the second channel.

The embodiments of the present invention further provide an example set top box control method described on the side of a friend set top box, i.e., the side of a set top box which receives the indication information, as shown in Fig. 2, including the following steps:
step S202: one or more second set top boxes receive indication information that carries operation information of an operation currently performed by a first set top box;
step S204: the one or more second set top boxes determine whether to also perform the operation; and
step S206: and when the one or more second set top boxes determine that the one or more second set top boxes are also to perform the operation, the one or more second set top boxes perform the operation.

In the example implementation, when performing a switching operation, a set top box sends switching information thereof to one or more set top boxes having an association relationship therewith, so that the one or more set top boxes having an association relationship therewith may learn about an operation currently performed on the set top box and thus determine whether to also perform the operation according to the operation of the set top box. By means of the method above, the technical problem that the application flexibility of set top boxes is low because set top boxes lack interaction with each other in the related art is effectively solved, thereby achieving the technical effects of improving the usage flexibility of set top boxes and improving the resource utilization ratio.

In an example embodiment, in the step S104, the case may be that the first set top box firstly sends the indication information to a network server, so that the network server forwards the corresponding indication information to the corresponding one or more second set top boxes. In an example implementation, the first set top box sending the indication information to the one or more second set top boxes includes:
S1: the first set top box sends the indication information to a network server; and
S2: the network server sending the indication information to the one or more second set top boxes, wherein the one or more set top boxes that are stored and have an association relationship with the first set top box are taken as the one or more second set top boxes by the network server.

After the first set top box completes registration on an IPTV server, the IPTV server may return an address of the network server to the first set top box, and accordingly the first set top box may find the corresponding network server according to the address obtained. In an example implementation, the first set top box sending the indication information to the network server includes: the first set top box sending the indication information to the network server by means of an address of the network server, wherein the address of the network server is sent by the IPTV server to the first set top box after the first set top box completes registration.

In an example embodiment, after the step S202, the above-mentioned method further includes: the one or more second set top boxes displaying brief introduction information of the operation information on one or more terminals corresponding to the one or more second set top boxes. For example, if what is received is to switch the first set top box to channel A, the brief introduction information of channel A may be displayed on the one or more terminals at this time.

In an example implementation, the step S206 includes: receiving a control instruction sent by a user for triggering the one or more second set top boxes to perform the operation; and the first set top box switching a current status of the first set top box to a status corresponding to an operation result indicated by the operation information in response to the control instruction. That is to say, the one or more second set top boxes will not perform the corresponding operation unless the user chooses to trigger. For example, a "Follow" button may be set, so that once the user clicks this button, the corresponding operation may be switched to.

In each of the above-mentioned example implementations, the operation includes, but is not limited to, at least one of: switching a current TV channel to a first TV channel; switching a current on-demand program to a first on-demand program; switching a currently listened music radio to a first music radio; switching currently enabled application software to first application software; switching from watching a TV channel to watching an on-demand program; and switching from watching an on-demand program to watching a TV channel. It is to be noted that the above-mentioned operations are just several operation situations that are listed, and the present invention is not limited thereto. Other operations are not listed here.

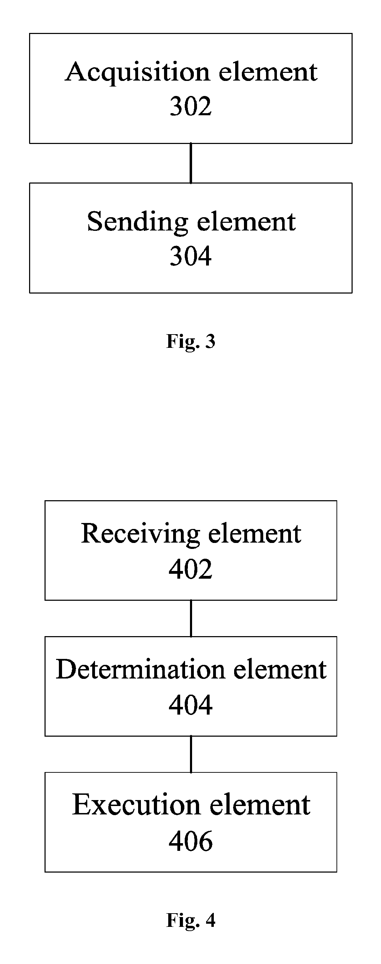

The embodiments of the present invention further provide a set top box control apparatus set to implement the above-mentioned embodiments and example implementations, which are already described and will not be described again. As used below, the term "element" or "component" may be a combination of software and/or hardware which implements predetermined functions. Although the apparatus described by the following embodiments can better be implemented by means of software, it is also possible and may be conceived to implement by means of a combination of software and hardware. Fig. 3 is an example block diagram showing the structure of a set top box control apparatus according to an embodiment of the present invention, as shown in Fig. 3, including: an acquisition element **302** and a sending element **304**. The structure is described below.

The acquisition element **302** is configured to acquire an operation currently performed by the set top box; and

the sending element **304** is coupled to the acquisition element **302** and is configured to send, to another set top box, indication information that carries operation information of the operation, wherein the indication information is used for instructing the another set top box to determine whether to also perform the operation.

The embodiments of the present invention further provide another set top box control apparatus, as shown in Fig. 4, including: a receiving element **402** configured to receive indication information that carries operation information of an operation currently performed by another set top box; a determination element **404** coupled to the receiving element **402** and configured to determine whether the set top box is also to perform the operation; and an execution element **406** coupled to the determination element **404** and configured to perform the operation when it is determined that the set top box is also to perform the operation.

The apparatus both in Fig. 3 and Fig. 4 may be located in the same set top box at the same time or be located in different set top boxes respectively.

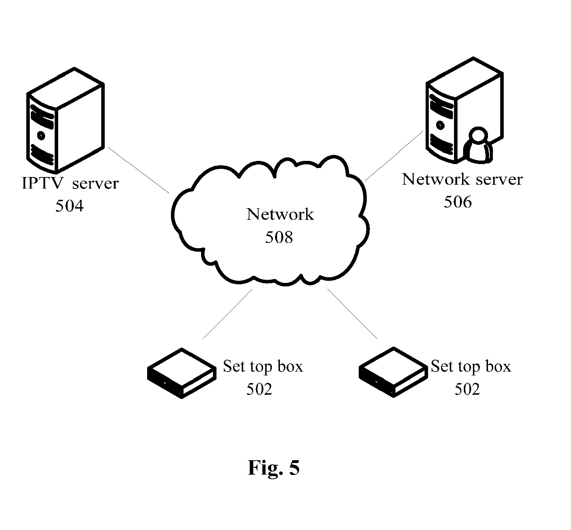

Channel switching will be taken as an example below to specifically describe the operation. A system for implementing channel selection on an IPTV set top box is provided in this example embodiment. As shown in Fig. 5, the system includes: a set top box **502**, an IPTV server **504**, a network server **506**, and a network **508**.
1) The IPTV server **504** is a server deployed on a network which, besides various IPTV service functions, is also set to return an address of the network server after the set top box registers successfully.
2) The network server **506** is also a server deployed on the network which is set to manage friend information of a set top box, and to forward, to the set top box, a message about a channel currently watched by a friend set top box (i.e., the set top box having an association relationship with a certain set top box may act as a friend set top box of the set top box).
3) The network **508** includes but is not limited to a TV network and/or a communication network.

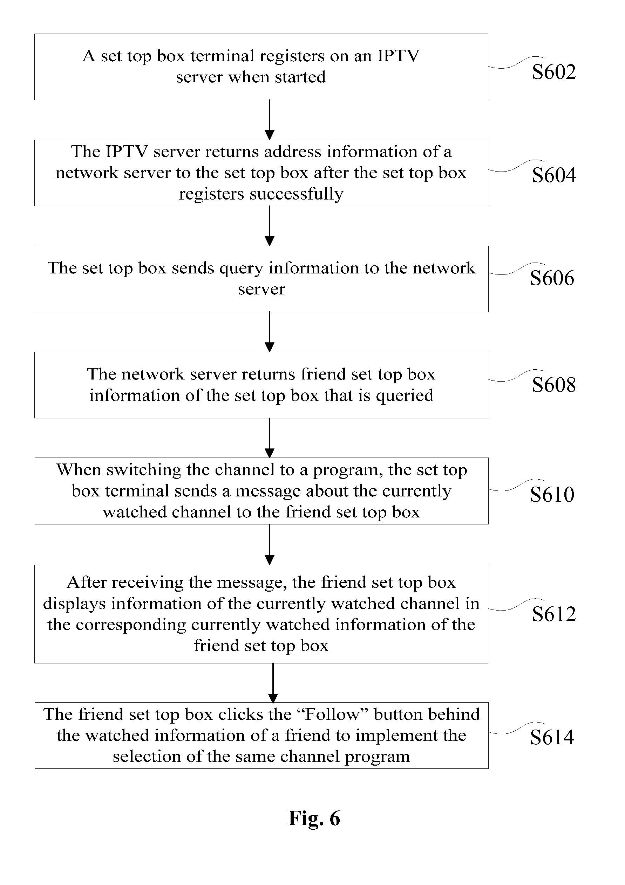

Based on the above-mentioned system for implementing channel selection on an IPTV set top box, the embodiments of the present invention provide a method for implementing channel selection on a set top box, as shown in Fig. 6, including the following steps:
step S602: a set top box terminal registers on an IPTV server when started;
step S604: the IPTV server returns address information of a network server to the set top box after the set top box registers successfully;
step S606: the set top box sends query information to the network server;
step S608: the network server returns friend set top box information of the set top box that is queried;
step S610: when switching the channel to a program, the set top box terminal sends a message about the currently watched channel to the friend set top box;
step S612: after receiving the message, the friend set top box displays information of the currently watched channel in the corresponding currently watched information of the friend set top box; and
step S614: the friend set top box clicks the "Follow" button behind the watched information of a friend to implement the selection of the same channel program;

By means of the combination of an IPTV system and an instant messaging system, the diversified service functions of an IPTV are implemented, thereby bringing better program watching and interaction experience to a user.

In another embodiment, software for implementing the technical solution described in the embodiments and example implementations is further provided.

In another embodiment, a storage medium storing the above-mentioned software is further provided, and the storage medium includes but is not limited to: an optic disk, a floppy disk, a hard disk, an erasable memory, etc.

It can be seen from the above description that the embodiments of the present invention implement the following technical effects: when performing a switching operation, a set top box sends switching information thereof to one or more set top boxes having an association relationship therewith, so that the one or more set top boxes having an association relationship therewith may learn about an operation currently performed on the set top box and thus determine whether to also perform the operation according to the operation of the set top box. By means of the method above, the technical problem that the application flexibility of set top boxes is low because set top boxes lack interaction with each other in the related art is effectively solved, thereby achieving the technical effects of improving the usage flexibility of set top boxes and improving the resource utilization ratio.

Obviously, those skilled in the art shall understand that the above-mentioned components or steps of the present invention can be realized by using general purpose calculating device, can be integrated in one calculating device or distributed on a network which consists of a plurality of calculating devices. Alternatively, the components or the steps of the present invention can be realized by using the executable program code of the calculating device. Consequently, they can be stored in the storing device and executed by the calculating device, and under some circumstances, the shown or described steps can be executed in different orders, or they are made into integrated circuit component respectively, or a plurality of components or steps thereof are made into one integrated circuit component. In this way, the present invention is not restricted to any particular hardware and software combination.

The descriptions above are only the example embodiments of the present invention, which are not used to restrict the present invention, for those skilled in the art; the present invention may have various changes and variations. Any amendments, equivalent substitutions, improvements, etc. within the principle of the present invention are all included in the scope of the protection of the present invention.

## Claims

1. A set top box control method, **characterized by** comprising:
a first set top box obtaining an operation currently performed by the first set top box; and
the first set top box sending, to one or more second set top boxes, indication information that carries operation information of the operation, wherein the indication information is used for instructing the one or more second set top boxes to determine whether to also perform the operation.

2. The method according to claim 1, **characterized in that** the first set top box sending the indication information to the one or more second set top boxes comprises:
the first set top box sending the indication information to a network server; and
the network server sending the indication information to the one or more second set top boxes, wherein the one or more set top boxes that are stored and have an association relationship with the first set top box are taken as the one or more second set top boxes by the network server.

3. The method according to claim 1, **characterized in that** the first set top box sending the indication information to an IPTV server on which the first set top box registers comprises:
the first set top box sending the indication information to a network server by means of an address of the network server, wherein the address of the network server is sent by the IPTV server to the first set top box after the first set top box completes registration.

4. The method according to any one of claims 1 to 3, **characterized in that** the operation comprises at least one of: switching a current TV channel to a first TV channel; switching a current on-demand program to a first on-demand program; switching a currently listened music radio to a first music radio; switching currently enabled application software to first application software; switching from watching a TV channel to watching an on-demand program; and switching from watching an on-demand program to watching a TV channel.

5. A set top box control method, **characterized by** comprising:
a first set top box receiving indication information that carries operation information of an operation currently performed by a second set top box;
the first set top box determining whether to also perform the operation; and
when the first set top box determines that the first set top box is also to perform the operation, the first set top box performing the operation.

6. The method according to claim 5, **characterized in that** after the first set top box receiving the indication information, the method further comprises:
the first set top box displaying brief introduction information of the operation information on a terminal corresponding to the first set top box.

7. The method according to claim 5, **characterized in that** the first set top box performing the operation comprises:
receiving a control instruction sent by a user for triggering the first set top box to perform the operation; and
the first set top box switching, in response to the control instruction, a current status of the first set top box to a status corresponding to an operation result indicated by the operation information.

8. The method according to any one of claims 5 to 7, **characterized in that** the first set top box is a set top box having an association relationship with the second set top box in a network server.

9. The method according to any one of claims 5 to 7, **characterized in that** the operation comprises at least one of: switching a current TV channel to a first TV channel; switching a current on-demand program to a first on-demand program; switching a currently listened music radio to a first music radio; switching currently enabled application software to first application software; switching from watching a TV channel to watching an on-demand program; and switching from watching an on-demand program to watching a TV channel.

10. A set top box control apparatus, **characterized in that** the set top box control apparatus is located inside a set top box and comprises:
an acquisition element configured to acquire an operation currently performed by the set top box; and
a sending element configured to send, to another set top box, indication information that carries operation information of the operation, wherein the indication information is used for instructing the another set top box to determine whether to also perform the operation.

11. A set top box control apparatus, **characterized in that** the set top box control apparatus is located inside a set top box and comprises:
a receiving element configured to receive indication information that carries operation information of an operation currently performed by another set top box;
a determination element configured to determine whether the set top box is also to perform the operation; and
an execution element configured to perform the operation when the determination element determines that the set top box is also to perform the operation.
